# EUROPEAN PATENT APPLICATION

(11) **EP 4 671 210 A1**
(43) Date of publication of application: **31.12.2025**
(21) Application number: 24760563.7
(22) Date of filing: 21.02.2024
(51) Int. Cl.: C01G 53/00, H01M 4/525, H01M 4/505, H01M 4/02

(54) **PREPARATION METHOD OF CATHODE ACTIVE MATERIAL PRECURSOR FOR LITHIUM SECONDARY BATTERY, AND CATHODE ACTIVE MATERIAL PRECURSOR FOR LITHIUM SECONDARY BATTERY, PREPARED BY SAME**

(30) Priority: 21.02.2023 KR 20230023162
(71) Applicant: Posco Future M Co., Ltd., Pohang-si, Gyeongsangbuk-do 37918 (KR)
(72) Inventor: CHOI, Seung Un, Gumi-si, Gyeongsangbuk-do 39171 (KR); LEE, Chang Hyun, Gumi-si, Gyeongsangbuk-do 39171 (KR); NAM, Gyeong Won, Gumi-si, Gyeongsangbuk-do 39171 (KR); JUNG, Kwang Eun, Gumi-si, Gyeongsangbuk-do 39171 (KR); JEUNG, Do Gak, Gumi-si, Gyeongsangbuk-do 39171 (KR); PARK, Jun Young, Gumi-si, Gyeongsangbuk-do 39171 (KR); LEE, Dong Young, Gumi-si, Gyeongsangbuk-do 39171 (KR); JANG, Hyun Seok, Gumi-si, Gyeongsangbuk-do 39171 (KR); KIM, Jeong Han, Gumi-si, Gyeongsangbuk-do 39171 (KR)
(74) Representative: Meissner Bolte Partnerschaft mbB
(86) International application number: PCT/KR2024/002251
(87) International publication number: WO 2024/177374

(57) **Abstract**

The present invention relates to a method for manufacturing a positive electrode active material precursor for a lithium secondary battery, the method comprising: a first coprecipitation step of introducing a first transition metal-containing solution, a first chelating agent-containing solution, and a first pH-adjusting agent-containing solution into a first reactor to form a first reaction solution, and performing a coprecipitation reaction at a first stirring speed; and a second coprecipitation step of transferring the first reaction solution to a second reactor, introducing a second transition metal-containing solution, a second chelating agent-containing solution, and a second pH-adjusting agent-containing solution to form a second reaction solution, and performing a coprecipitation reaction at a second stirring speed to form a positive electrode active material precursor, wherein the second stirring speed is lower than the first stirring speed.

## Description

### [Technical Field]

The present invention relates to a method for manufacturing a positive electrode active material precursor for a lithium secondary battery and to a positive electrode active material precursor for a lithium secondary battery manufactured thereby.

### [Background]

With the advancement of technology for mobile devices and the increasing demand therefor, the demand for secondary batteries as an energy source has been rapidly increasing. Among such secondary batteries, lithium secondary batteries, which have high energy density and voltage, long cycle life, and low self-discharge rate, have been commercialized and are widely used.

As the positive electrode active material of lithium secondary batteries, lithium transition metal composite oxides are used. Among these, lithium cobalt composite metal oxides such as LiCoO₂, which have a high operating voltage and excellent capacity characteristics, are mainly used. However, LiCoO₂ has very poor thermal properties due to structural instability caused by delithiation, and its high cost limits its large-scale use as a power source in applications such as electric vehicles.

As alternative materials to LiCoO₂, lithium manganese composite metal oxides (such as LiMnO₂ or LiMn₂O₄), lithium iron phosphate compounds (such as LiFePO₄), and lithium nickel composite metal oxides (such as LiNiO₂) have been developed. Among these, lithium nickel composite metal oxides, which have a high reversible capacity of about 200 mAh/g and thus can readily realize large-capacity batteries, have been more actively researched and developed. However, LiNiO₂ has inferior thermal stability compared to LiCoO₂, and when an internal short circuit occurs under a charged state due to external pressure or the like, the positive electrode active material itself may decompose, causing rupture or ignition of the battery. Accordingly, lithium nickel cobalt metal oxides, in which part of Ni is substituted with Co and a metal element M (where M is at least one of Mn or Al), have been developed as a means of improving the low thermal stability while maintaining the excellent reversible capacity of LiNiO₂.

As a method for manufacturing a precursor of such a positive electrode active material, a typical approach is to use a batch-type reactor. However, in the case of using a conventional batch-type reactor, once the coprecipitation reaction proceeds and the reaction solution in the reactor reaches full capacity, the reaction must be stopped, followed by a washing process and an initial condition setting period for the next reaction, which is a drawback. Furthermore, at high stirring speeds, issues such as motor overload and vibration arise, making it difficult to increase the reactor size. As a result, the productivity of the positive electrode active material precursor is significantly reduced. In addition, due to continuous high-speed stirring during the coprecipitation process, problems such as cracks (particle breakage), fines, or abrasion occur in the precursor.

### [Detailed Description of the Invention]

### [Technical Problem]

In view of the above, one object of the present invention is to provide a method for manufacturing a positive electrode active material precursor capable of significantly improving productivity and markedly reducing cracks (particle breakage), fines, or abrasion.

Another object of the present invention is to provide a positive electrode active material precursor manufactured by the above method.

### [Technical Solution]

According to one embodiment of the present invention, there is provided a method for manufacturing a positive electrode active material precursor for a lithium secondary battery, the method comprising: a first coprecipitation step of introducing a first transition metal-containing solution, a first chelating agent-containing solution, and a first pH-adjusting agent-containing solution into a first reactor to form a first reaction solution, and performing a coprecipitation reaction at a first stirring speed; and a second coprecipitation step of transferring the first reaction solution to a second reactor, introducing a second transition metal-containing solution, a second chelating agent-containing solution, and a second pH-adjusting agent-containing solution to form a second reaction solution, and performing a coprecipitation reaction at a second stirring speed to form a positive electrode active material precursor, wherein the second stirring speed is lower than the first stirring speed.

The volume of the second reactor may be greater than that of the first reactor.

The second reactor may be a plurality of reactors.

The second reactor may be from 2 to 4 reactors.

The first stirring speed may be from 100 to 170 rpm.

The first stirring speed may be adjusted to include a stirring speed reduction region.

The second stirring speed may be from 30 to 100 rpm.

The first coprecipitation step may be performed under a first pH condition, and the second coprecipitation step may be performed under a second pH condition, the second pH being adjustable to a value between a maximum value and a minimum value of the first pH.

The first pH may be adjusted to from 11 to 13, and the second pH may be adjusted to from 10 to 12.

The first pH may be sequentially adjusted to include a pH reduction region, a first pH region, and a second pH region, and the pH values of the first pH region and the second pH region may be lower than a starting pH value of the first pH.

In the first coprecipitation step, a supply rate of the first transition metal-containing solution may be sequentially adjusted to include a first supply rate region and a second supply rate region, the second supply rate being greater than the first supply rate.

The first supply rate may be from 250 to 350 kg/h, and the second supply rate may be from 1900 to 2100 kg/h.

In the second coprecipitation step, a supply rate of the second transition metal-containing solution may be from 1900 to 2100 kg/h.

In the first coprecipitation step, a supply rate of the first chelating agent-containing solution may be greater than a supply rate of the second chelating agent-containing solution in the second coprecipitation step.

The supply rate of the first chelating agent-containing solution may be from 1.3 to 1.7 kg/h, and the supply rate of the second chelating agent-containing solution may be from 0.4 to 0.8 kg/h.

In the first coprecipitation step, an ammonia concentration of the first reaction solution may be adjusted to from 0.40 to 1.60 wt% and may be adjusted to include a concentration increase region, and in the second coprecipitation step, an ammonia concentration of the second reaction solution may be adjusted to a value between a maximum value and a minimum value of the ammonia concentration of the first reaction solution.

In the second coprecipitation step, the ammonia concentration of the second reaction solution may be sequentially adjusted to include a concentration reduction region and a concentration maintenance region, and the ammonia concentration in the concentration maintenance region may be adjusted to from 0.80 to 1.00 wt%.

In the second coprecipitation step, a portion of the second reaction solution may be discharged through a discharge port attached to one side of the second reactor, and only the liquid phase may be selectively discharged through CCSVR (Continuous Concentrate Single Vessel Reactor) concentration in the discharge port.

Another embodiment of the present invention provides a positive electrode active material precursor for a lithium secondary battery manufactured by the above-described method.

### [Advantageous Effects]

According to one embodiment of the present invention, the method for manufacturing a positive electrode active material precursor for a lithium secondary battery can significantly increase the total reactor volume by performing the coprecipitation reaction using a first reactor in which a high-speed stirring coprecipitation reaction occurs and a second reactor in which a low-speed stirring coprecipitation reaction occurs, thereby greatly improving the productivity of the precursor and markedly reducing the occurrence of cracks, fines, or abrasion in the precursor.

In addition, such a coprecipitation reaction system has an industrial advantage in that the equipment is simple, resulting in low process costs, and coprecipitation reaction conditions can be easily controlled to produce precursors with various specifications.

### [Brief Description of Drawings]

FIG. 1 is a schematic diagram of a system for manufacturing a positive electrode active material precursor for a lithium secondary battery according to one embodiment of the present invention.
FIG. 2 is a pH profile in manufacturing a positive electrode active material precursor for a lithium secondary battery according to Example 1 and Comparative Example 1.
FIG. 3 is a stirring speed profile in manufacturing a positive electrode active material precursor for a lithium secondary battery according to Example 1 and Comparative Example 1.
FIG. 4 is a supply rate profile of the transition metal-containing solution in manufacturing a positive electrode active material precursor for a lithium secondary battery according to Example 1 and Comparative Example 1.
FIG. 5 is a supply rate profile of the chelating agent-containing solution in manufacturing a positive electrode active material precursor for a lithium secondary battery according to Example 1 and Comparative Example 1.
FIG. 6 is an ammonia concentration profile of the reaction solution in manufacturing a positive electrode active material precursor for a lithium secondary battery according to Example 1 and Comparative Example 1.
FIGS. 7, 9, and 10 are SEM images of the positive electrode active material precursor manufactured according to Example 1.
FIGS. 8, 11, and 12 are SEM images of the positive electrode active material precursor manufactured according to Comparative Example 1.

### [Mode for Carrying Out the Invention]

The terms "first," "second," "third," and the like are used herein to describe various portions, components, regions, layers, and/or sections, but are not limited thereto. These terms are merely used to distinguish one portion, component, region, layer, or section from another portion, component, region, layer, or section. Thus, a first portion, component, region, layer, or section described below may be referred to as a second portion, component, region, layer, or section within the scope of the present invention.

The technical terms used herein are intended solely to refer to particular embodiments and are not intended to limit the present invention. Unless the context clearly dictates otherwise, singular forms as used herein include plural forms as well. The term "comprising," as used in the specification, specifies the presence of a stated feature, region, integer, step, operation, element, and/or component, but does not preclude the presence or addition of one or more other features, regions, integers, steps, operations, elements, and/or components.

When a part is referred to as being "on" or "above" another part, it may be directly on or above the other part, or one or more intervening parts may be present therebetween. In contrast, when a part is referred to as being "directly on" or "directly above" another part, there are no intervening parts therebetween.

Unless otherwise defined, all terms used herein, including technical and scientific terms, have the same meaning as commonly understood by those of ordinary skill in the art to which this invention pertains. Terms generally defined in dictionaries shall be interpreted as having a meaning consistent with the context of the relevant technical literature and the present disclosure, and shall not be interpreted in an idealized or overly formal sense unless expressly defined otherwise.

Unless otherwise stated, "%" denotes weight percent, and "1 ppm" denotes 0.0001 weight percent.

In the present specification, the expression "combinations thereof" in a Markush-type expression means any mixture or combination of one or more components selected from the group consisting of the components described in the Markush-type expression, and refers to including any one or more selected from the group consisting of such components.

Hereinafter, embodiments of the present invention will be described in detail to enable those skilled in the art to readily carry out the invention. However, the present invention may be embodied in many different forms and is not limited to the embodiments set forth herein.

Conventionally, a batch-type coprecipitation reactor has generally been used for performing a coprecipitation reaction to manufacture a positive electrode active material precursor. In such coprecipitation reactions, the productivity of the precursor generally tends to be proportional to the volume of the coprecipitation reactor. However, batch-type coprecipitation reactors have a limitation in increasing the reactor volume due to issues such as motor overload and vibration during high-speed stirring, resulting in reduced precursor productivity. Furthermore, when a high-speed stirring coprecipitation reaction is performed for an extended period of time, problems arise in that cracks (particle breakage) occur in the precursor, and the amount of fines and wear increases.

Accordingly, the present inventors have completed the present invention by devising a coprecipitation reaction system in which the coprecipitation reaction is divided and performed in a first reactor and a second reactor, wherein high-speed stirring coprecipitation is carried out in the first reactor and low-speed stirring coprecipitation is carried out in the second reactor, thereby not only significantly increasing the volume of the coprecipitation reactor but also reducing the occurrence of cracks in the precursor. Hereinafter, the present invention will be described in further detail.

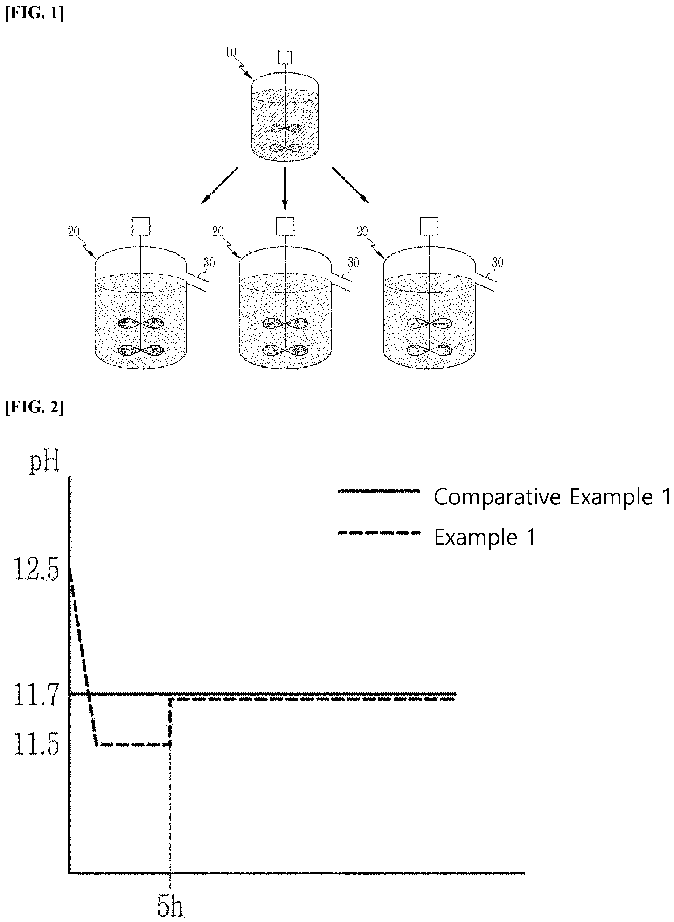

FIG. 1 is a schematic diagram of a system for manufacturing a positive electrode active material precursor for a lithium secondary battery according to one embodiment of the present invention.

Referring to FIG. 1, one embodiment of the present invention provides a method for manufacturing a positive electrode active material precursor for a lithium secondary battery, the method comprising: a first coprecipitation step of introducing a first transition metal-containing solution, a first chelating agent-containing solution, and a first pH-adjusting agent-containing solution into a first reactor (10) to form a first reaction solution, and performing a coprecipitation reaction at a first stirring speed; and a second coprecipitation step of transferring the first reaction solution to a second reactor (20), introducing a second transition metal-containing solution, a second chelating agent-containing solution, and a second pH-adjusting agent-containing solution to form a second reaction solution, and performing a coprecipitation reaction at a second stirring speed to form a positive electrode active material precursor, wherein the second stirring speed is lower than the first stirring speed.

First, the overall precursor manufacturing system of the present invention will be described.

According to one embodiment of the present invention, the method for manufacturing a positive electrode active material precursor comprises a first coprecipitation step, which is a low-speed stirring coprecipitation step, and a second coprecipitation step, which is a high-speed stirring coprecipitation step.

The first coprecipitation step is performed in a first reactor, and in the first reactor (10), a first transition metal-containing solution, a first chelating agent-containing solution, and a first pH-adjusting agent-containing solution are introduced to form a first reaction solution, in which the coprecipitation reaction is performed at a first stirring speed.

The second coprecipitation step is performed in a second reactor (20), to which the first reaction solution, in which the coprecipitation reaction has proceeded to some extent, is transferred. In the second reactor, a second transition metal-containing solution, a second chelating agent-containing solution, and a second pH-adjusting agent-containing solution are additionally introduced to form a second reaction solution, and the coprecipitation reaction is performed at a second stirring speed. As a result, a final positive electrode active material precursor can be obtained.

In this case, the second stirring speed is lower than the first stirring speed. By including such a low-speed stirring coprecipitation reaction, the occurrence of cracks, fines, or abrasion in the precursor can be markedly reduced.

Furthermore, since the coprecipitation in the second reactor is performed at a low second stirring speed, motor overload and vibration issues are significantly reduced compared to the first reactor, thereby allowing the volume of the second reactor to be larger than that of the first reactor. As described above, an increase in the volume of the coprecipitation reactor leads to an increase in precursor productivity, so the productivity improvement effect can be maximized. For example, the first coprecipitation reactor may have a volume of about 10 m³, and the second coprecipitation reactor may have a volume of about 30 m³; however, the invention is not limited thereto, and various sizes can be implemented depending on the process purpose.

In addition, the second reactor may be a plurality of reactors, and more specifically, may comprise from 2 to 4 reactors. As the number of second reactors increases, the volume of the coprecipitation reactor increases, thereby maximizing the precursor productivity. However, if the number of second reactors is too large, there may be problems such as an increase in the total reaction time and large variations in the concentration of the solution, which is why the upper limit is set as described above.

The stirring speed conditions of the precursor manufacturing method of the present invention will now be described in more detail.

In the first coprecipitation step, the first stirring speed may be adjusted to a range of 100 to 170 rpm, or to a range of 100 to 160 rpm.

More specifically, the first stirring speed may be adjusted to include a stirring speed reduction region. In this case, the stirring speed reduction region may extend throughout the entire first coprecipitation step or may be applied only during a portion of the first coprecipitation step.

The second stirring speed may be from 30 to 100 rpm, and more specifically, from 40 to 100 rpm.

More specifically, in the initial stage of the second coprecipitation step, the second stirring speed may include a stirring speed reduction region, and may then be sequentially adjusted to include a stirring speed maintenance region. Of course, in practical process implementation, slight fluctuations in the stirring speed may occur within the stirring speed maintenance region.

With the ranges and profiles of the first stirring speed and the second stirring speed configured as described above, the reaction can be induced in a direction that reduces the zeta potential of the particles, thereby suppressing new nucleation and reducing particle collision. As a result, desirable effects such as prevention of precursor cracking and suppression of fines and abrasion can be achieved.

Meanwhile, when forming the second reaction solution in the second coprecipitation step, additional water may be introduced. This facilitates the reduction of the stirring speed, thereby enabling easier implementation of the range and profile of the second stirring speed.

The pH conditions of the precursor manufacturing method of the present invention will now be described in more detail.

The first coprecipitation step is performed under a first pH condition, and the second coprecipitation step is performed under a second pH condition, wherein the second pH may be adjusted to a value between the maximum value and the minimum value of the first pH.

In this case, the first pH may be adjusted to from 11 to 13, and the second pH may be adjusted to from 10 to 12.

Specifically, the maximum value of the first pH may be from 12.5 to 13, and the minimum value of the first pH may be from 11 to 11.6. In addition, the ending pH value of the first pH may be lower than the starting pH value.

More specifically, the first pH may be sequentially adjusted to include a pH reduction region, a first pH region, and a second pH region, and the pH values of the first pH region and the second pH region may be lower than the starting pH value of the first pH.

The magnitude relationship between the pH value of the first pH region and the pH value of the second pH region is not particularly limited. For example, the pH value of the second pH region may be lower than, equal to, or higher than the pH value of the first pH region. In this case, the pH value of the second pH region may be from 11 to 12.

The first pH region and the second pH region may be maintained substantially constant; however, slight variations may occur in actual process implementation.

The second pH may more specifically be adjusted to from 10 to 12, or from 11 to 12, and may exhibit a substantially constant pattern, although slight fluctuations may occur in actual process implementation.

With the ranges and profiles of the first pH and the second pH configured as described above, an appropriate amount of seed can be generated at the initial stage, and subsequently, a relatively lower pH can be maintained to improve particle aggregation and orientation of the precursor. When the aggregation and orientation of precursor particles are improved, the capacity and output characteristics of the battery can be enhanced.

The supply rate conditions of the transition metal-containing solution in the precursor manufacturing method of the present invention will now be described in more detail.

In the first coprecipitation step, the supply rate of the first transition metal-containing solution is sequentially adjusted to include a first supply rate region and a second supply rate region, and the second supply rate may be greater than the first supply rate.

More specifically, the first supply rate may be from 250 to 350 kg/h, or from 280 to 320 kg/h, and may exhibit a substantially constant pattern, although slight variations may occur in actual process implementation.

The second supply rate may be from 1900 to 2100 kg/h, or from 1950 to 2050 kg/h, and may also exhibit a substantially constant pattern, although slight variations may occur in actual process implementation.

In the second coprecipitation step, the supply rate of the second transition metal-containing solution may be from 1900 to 2100 kg/h, or from 1950 to 2050 kg/h, and may exhibit a substantially constant pattern, although slight fluctuations may occur in actual process implementation.

With the ranges and profiles of the first and second transition metal-containing solution supply rates configured as described above, it becomes possible to control the reaction time and to manufacture a high-density precursor.

The supply rate conditions of the chelating agent-containing solution in the precursor manufacturing method of the present invention will now be described in more detail.

In the first coprecipitation step, the supply rate of the first chelating agent-containing solution may be greater than the supply rate of the second chelating agent-containing solution in the second coprecipitation step.

In this case, the supply rate of the first chelating agent-containing solution may be from 1.3 to 1.7 kg/h, or from 1.4 to 1.6 kg/h, and the supply rate of the second chelating agent-containing solution may be from 0.4 to 0.8 kg/h, or from 0.5 to 0.7 kg/h.

The supply rates of the first chelating agent-containing solution and the second chelating agent-containing solution may exhibit substantially constant patterns; however, slight fluctuations may occur in actual process implementation.

With the ranges and profiles of the first and second chelating agent-containing solution supply rates configured as described above, it becomes possible to readily control the morphology and density of the primary particles.

The ammonia concentration conditions of the reaction solution in the precursor manufacturing method of the present invention will now be described in more detail.

In the first coprecipitation step, the ammonia concentration of the first reaction solution is adjusted to from 0.40 to 1.60 wt%, and the ammonia concentration of the first reaction solution is adjusted to include a concentration increase region. In the second coprecipitation step, the ammonia concentration of the second reaction solution may be adjusted to a value between the maximum value and the minimum value of the ammonia concentration of the first reaction solution. More specifically, in the first coprecipitation step, the minimum value of the ammonia concentration of the first reaction solution may be from 0.40 to 0.50 wt%, and the maximum value of the ammonia concentration of the first reaction solution may be from 1.40 to 1.60 wt%. In addition, the final concentration of the first reaction solution in the first coprecipitation step may be greater than the initial concentration.

In the second coprecipitation step, the ammonia concentration of the second reaction solution is sequentially adjusted to include a concentration reduction region and a concentration maintenance region, and the ammonia concentration in the concentration maintenance region may be adjusted to from 0.80 to 1.00 wt% or from 0.85 to 0.95 wt%. Of course, slight fluctuations may occur in the concentration maintenance region in actual process implementation.

With the ranges and profiles of the ammonia concentration of the first reaction solution and the ammonia concentration of the second reaction solution configured as described above, uniform seed formation can be achieved.

Meanwhile, in the second coprecipitation step, a portion of the second reaction solution may be discharged through a discharge port (30) attached to one side of the second reactor, and only the liquid phase of the second reaction solution may be selectively discharged through CCSVR (Continuous Concentrate Single Vessel Reactor) concentration in the discharge port.

More specifically, in the second coprecipitation step, when the second reaction solution reaches 50% to 90% or more of the volume of the second reactor, only the liquid phase of the second reaction solution may be selectively discharged through the discharge port.

In the present specification, CCSVR (Continuous Concentrate Single Vessel Reactor) concentration refers to a process in which, when the coprecipitation reaction solution exceeds a certain volume, several layers of sieves mounted within the discharge port attached to one side of the coprecipitation reactor filter out the solid precursor so that it remains in the reactor, while only the liquid phase of the reaction solution is discharged. As a result, reactions can be continuously carried out beyond the reactor volume.

Through this, by selectively discharging only the liquid phase from the second reaction solution and allowing the solid precursor to remain in the reactor, additional reaction solution volume can be secured, the solid-liquid ratio can be increased, and the efficiency of the coprecipitation reaction can be improved, thereby further maximizing productivity. In particular, CCSVR concentration carried out in the discharge port of the second reactor eliminates the need for a separate concentrating vessel, thereby providing higher space efficiency and lower equipment cost, offering advantages in achieving process economy.

The first and second transition metal-containing solutions, the first and second chelating agent-containing solutions, and the first and second pH-adjusting agent-containing solutions used in the precursor manufacturing method of the present invention will now be described in more detail.

The first and second transition metal-containing solutions may be prepared by adding a nickel raw material and, optionally, a cobalt raw material or a manganese raw material into a solvent, specifically water or a mixed solvent of water and an organic solvent uniformly miscible with water (for example, alcohol), or may be prepared by mixing an aqueous solution of a nickel raw material with, optionally, an aqueous solution of a cobalt raw material or an aqueous solution of a manganese raw material.

The first and second transition metal-containing solutions may include nickel in an amount of 60 to 99 atm%, 70 to 99 atm%, 80 to 99 atm%, 85 to 99 atm%, 90 to 99 atm%, or 90 to 95 atm% of the total transition metal content.

The first and second transition metal-containing solutions may include cobalt in an amount of 0 to 30 atm%, 1 to 20 atm%, 1 to 10 atm%, 2 to 8 atm%, or 2 to 6 atm% of the total transition metal content.

The first and second transition metal-containing solutions may further include manganese in an amount of 0 to 30 atm%, 1 to 20 atm%, 1 to 10 atm%, 2 to 8 atm%, or 2 to 6 atm% of the total transition metal content.

The first and second chelating agent-containing solutions function to form complexes and may include, for example, NH₃, NH₄OH, (NH₄)₂SO₄, NH₄NO₃, NH₄Cl, CH₃COONH₄, NH₄CO₃, or combinations thereof, without being limited thereto. The chelating agent-containing solutions may be used in the form of an aqueous solution, in which the solvent may be water or a mixture of water and an organic solvent uniformly miscible with water (specifically, alcohol).

The first and second pH-adjusting agent-containing solutions function as precipitants or pH controllers and may include hydroxides of alkali metals or alkaline earth metals such as NaOH, KOH, or Ca(OH)₂, hydrates thereof, or alkali compounds thereof, or combinations thereof. The pH-adjusting agent-containing solutions may also be used in the form of an aqueous solution, in which the solvent may be water or a mixture of water and an organic solvent uniformly miscible with water (specifically, alcohol).

Meanwhile, the coprecipitation reaction may be performed under an inert atmosphere such as nitrogen or argon.

Another embodiment of the present invention provides a positive electrode active material precursor for a lithium secondary battery manufactured by the above-described method.

Since the positive electrode active material precursor is manufactured according to the present process, the occurrence of cracks, fines, or abrasion is significantly reduced, and sphericity, degree of aggregation, and orientation can be remarkably improved. The morphology of such a positive electrode active material precursor can be confirmed through SEM (Scanning Electron Microscope) images.

The positive electrode active material precursor may be a hydroxide containing nickel and, optionally, further containing cobalt or manganese, and more specifically, may be represented by the following Chemical Formula 1:

**[Chemical Formula 1]** Niₓ₁Co_{γ1}Mn*z*₁(OH)₂

wherein, 0.6 ≤ x₁ ≤ 0.99, 0 ≤ y₁ ≤ 0.3, and 0 ≤ z₁ ≤ 0.3.

Hereinafter, embodiments of the present invention will be described in greater detail through examples. However, the following examples are merely preferred embodiments of the present invention, and the present invention is not limited thereto.

### Example 1: Two-step Coprecipitation Using First and Second Reactors

(Raw Material Preparation) A first transition metal-containing solution and a second transition metal-containing solution were prepared by mixing nickel sulfate, cobalt sulfate, and manganese sulfate in a molar ratio of 0.88:0.05:0.07. At this time, the concentration of transition metal elements in the transition metal-containing solution was adjusted to 2.5 M. As the first chelating agent-containing solution and the second chelating agent-containing solution, an aqueous ammonia solution having a concentration of 28 wt% was prepared. In addition, as the first pH-adjusting agent-containing solution and the second pH-adjusting agent-containing solution, an aqueous sodium hydroxide solution having a concentration of 25 wt% was prepared.

(First Coprecipitation Step) In a first reactor having a volume of 10 m³, the first transition metal-containing solution, the first chelating agent-containing solution, and the first pH-adjusting agent-containing solution were introduced to form a first reaction solution. Nitrogen gas was supplied into the reactor to remove dissolved oxygen, and the temperature of the reactor was maintained at 50°C while stirring to perform the coprecipitation reaction. At this time, the initial pH of the first coprecipitation step was 12.5, the initial stirring speed was 150 rpm, the initial supply rate of the first transition metal-containing solution was 300 kg/h, the initial supply rate of the first chelating agent-containing solution was 1.5 kg/h, and the initial ammonia concentration of the first reaction solution was 0.45 wt%.

(Second Coprecipitation Step) When about 7 to 10 hours had elapsed from the start of the first coprecipitation reaction, the first reaction solution was transferred to three second reactors, each having a volume of 30 m³. While transferring, a second transition metal-containing solution, a second chelating agent-containing solution, a second pH-adjusting agent-containing solution, and water were additionally introduced to form a second reaction solution. Nitrogen gas was supplied into the reactor to remove dissolved oxygen, and the reactor temperature was maintained at 50°C while stirring to perform the coprecipitation reaction.

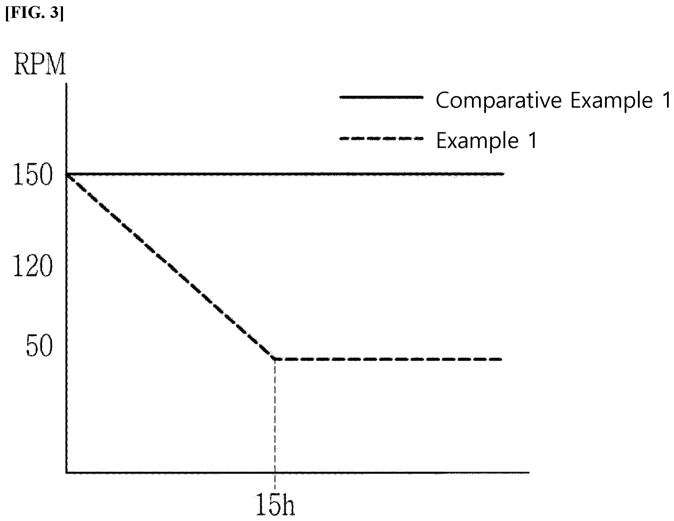

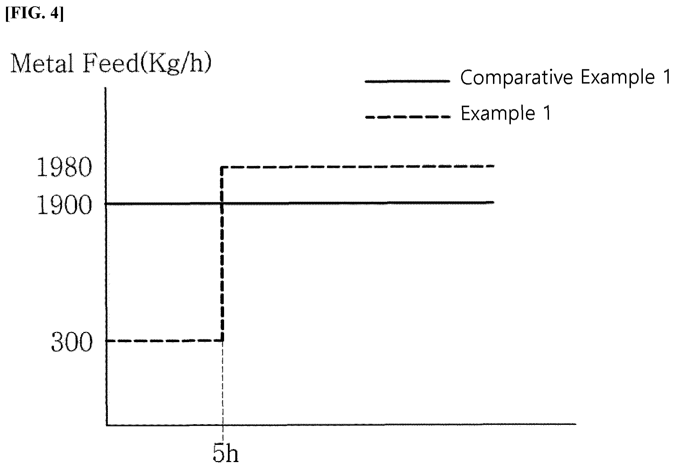

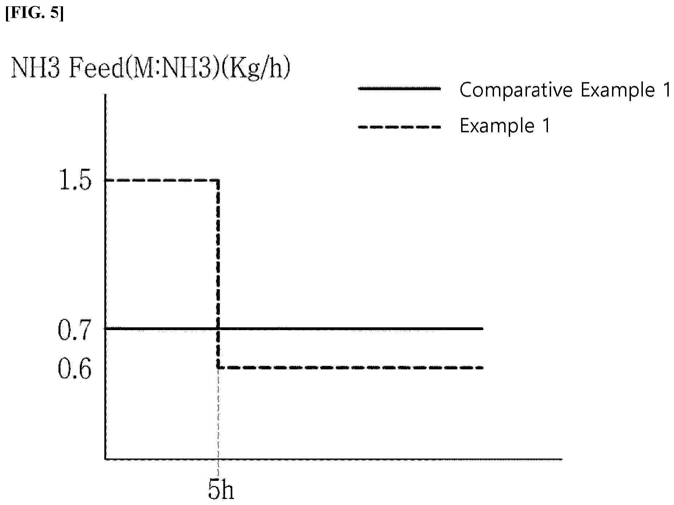

During the progress of the first and second coprecipitation steps, the profiles of pH, stirring speed, transition metal-containing solution supply rate, chelating agent-containing solution supply rate, and ammonia concentration of the reaction solution in the coprecipitation reaction zone are shown in FIGS. 2 to 6, respectively. The total coprecipitation reaction time was about 50 to 60 hours. The composition of the manufactured positive electrode active material precursor was Ni_{0.88}Co_{0.05}Mn_{0.07}(OH)₂.

### Comparative Example 1: One-step Coprecipitation Using a Single Reactor

A transition metal-containing solution, a chelating agent-containing solution, and a pH-adjusting agent-containing solution having the same composition as in Example 1 were prepared and introduced into a single coprecipitation reactor to perform a coprecipitation reaction. The process was carried out under the following initial conditions: the initial pH was 11.7, the initial stirring speed was 150 rpm, the initial supply rate of the transition metal-containing solution was 1900 kg/h, the initial supply rate of the chelating agent-containing solution was 0.7 kg/h, and the initial ammonia concentration of the reaction solution was 0.90 wt%. These initial process conditions were maintained constant throughout the entire coprecipitation reaction in a one-step coprecipitation process, except that the same procedure as in Example 1 was otherwise followed to manufacture the positive electrode active material precursor. The process condition profiles are shown in FIGS. 2 to 6, respectively. The total coprecipitation reaction time was about 50 to 60 hours. The composition of the manufactured positive electrode active material precursor was the same as that of Example 1.

### Experimental Example 1: Comparison of Positive Electrode Active Material Precursor Yield

The yield of the positive electrode active material precursors manufactured according to Example 1 and Comparative Example 1 was measured, and the results are shown in Table 1 below.

**[Table 1]**

| | Precursor Production Yield |
|---|---|
| Example 1 | 18 ton |
| Comparative Example 1 | 6 ton |

Referring to Table 1, it was confirmed that by applying the two-step coprecipitation reaction of the present invention, precursor productivity was remarkably improved, by about threefold.

### Experimental Example 2: Evaluation of Precursor Cracks, Fines, and Wear

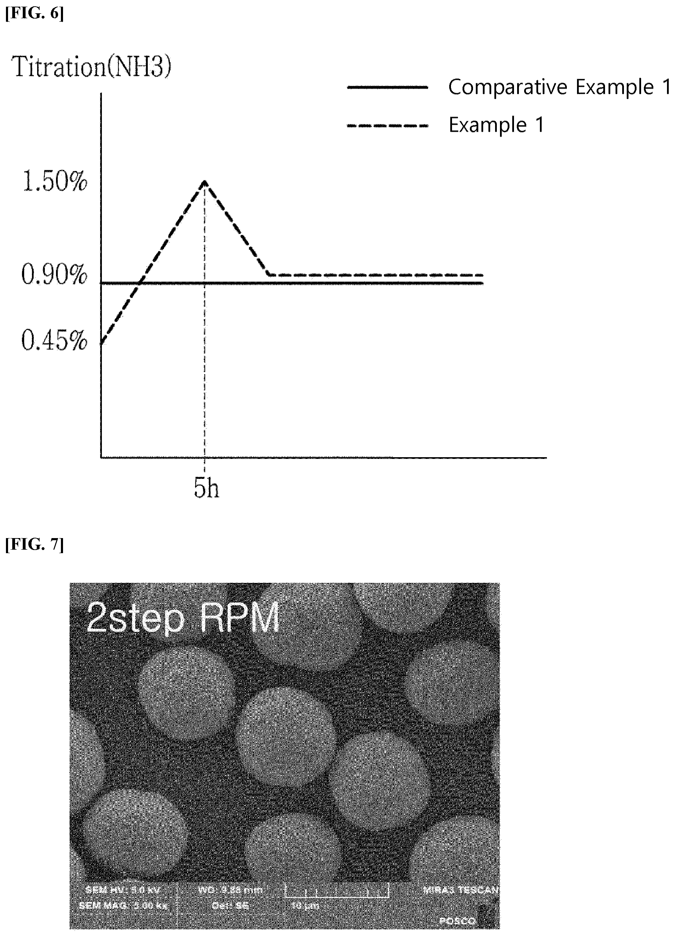

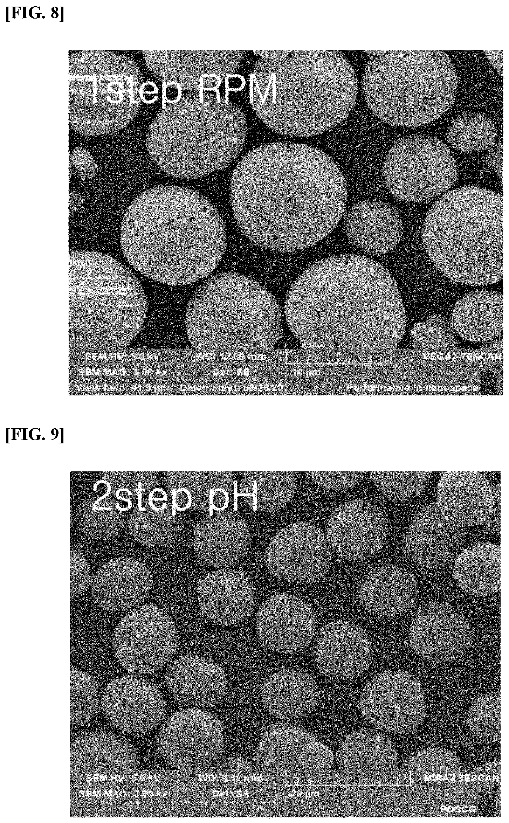

SEM images of the positive electrode active material precursors manufactured according to Example 1 and Comparative Example 1 were observed, and the results are shown in FIG. 7 (Example 1) and FIG. 8 (Comparative Example 1).

Referring to FIGS. 7 and 8, it was confirmed that the positive electrode active material precursor of Example 1, manufactured by the two-step high-speed and low-speed stirring profile process, exhibited significantly reduced occurrence of cracks, fines, or wear compared to Comparative Example 1.

### Experimental Example 3: Evaluation of Precursor Orientation and Sphericity

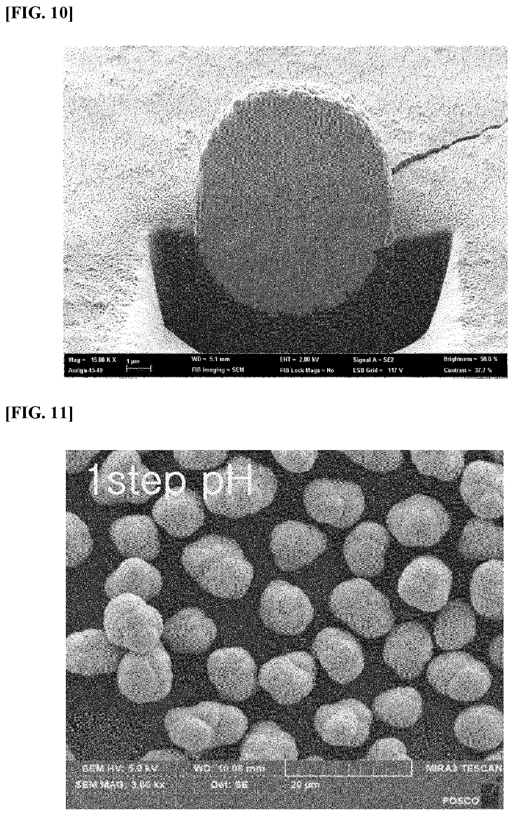

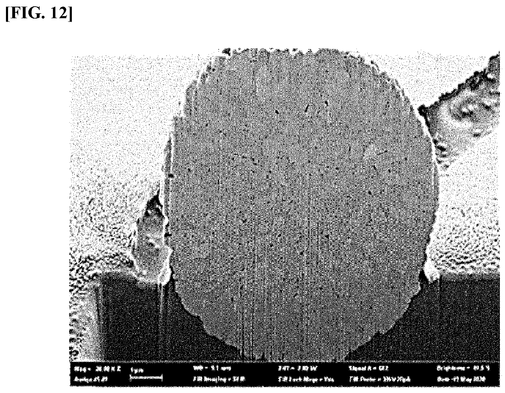

SEM images of the positive electrode active material precursors manufactured according to Example 1 and Comparative Example 1 were observed, and the results are shown in FIGS. 9 to 10 (Example 1) and FIGS. 11 to 12 (Comparative Example 1).

Referring to FIGS. 9 to 12, it was confirmed that the positive electrode active material precursor of Example 1, manufactured through the two-step pH profile process, exhibited superior overall sphericity of secondary precursor particles and markedly improved orientation of primary particles within the secondary particles compared to Comparative Example 1. Accordingly, it was predicted that such improvements would contribute to enhanced capacity and output characteristics of the battery.

In summary, the technical gist of the present invention is that, through the two-step coprecipitation process using high-speed and low-speed coprecipitation reactors, the reactor volume can be significantly increased, thereby greatly improving precursor productivity, while also markedly reducing the occurrence of cracks, fines, or wear, thus enhancing the physical properties of the precursor.

In addition, by controlling other process condition parameters such as pH, the sphericity and orientation of the precursor can be further improved.

Although the preferred embodiments of the present invention have been described above, the present invention is not limited thereto, and it is apparent that various modifications can be made within the scope of the appended claims, the detailed description, and the accompanying drawings, and such modifications also fall within the scope of the present invention.

Accordingly, the substantial scope of rights of the present invention shall be defined by the appended claims and their equivalents.

### [Description of Reference Numerals]

10: First reactor
20: Second reactor
30: Discharge port

## Claims

1. A method for manufacturing a positive electrode active material precursor for a lithium secondary battery, comprising: introducing a first transition metal-containing solution, a first chelating agent-containing solution, and a first pH-adjusting agent-containing solution into a first reactor to form a first reaction solution, and performing a coprecipitation reaction at a first stirring speed in a first coprecipitation step; and transferring the first reaction solution to a second reactor, introducing a second transition metal-containing solution, a second chelating agent-containing solution, and a second pH-adjusting agent-containing solution to form a second reaction solution, and performing a coprecipitation reaction at a second stirring speed to form a positive electrode active material precursor in a second coprecipitation step, wherein the second stirring speed is lower than the first stirring speed.

2. The method of claim 1, wherein a volume of the second reactor is greater than a volume of the first reactor.

3. The method of claim 1, wherein the second reactor is a plurality of reactors.

4. The method of claim 3, wherein the second reactor comprises 2 to 4 reactors.

5. The method of claim 1, wherein the first stirring speed is from 100 to 170 rpm.

6. The method of claim 5, wherein the first stirring speed is adjusted to include a stirring speed reduction region.

7. The method of claim 1, wherein the second stirring speed is from 30 to 100 rpm.

8. The method of claim 1, wherein the first coprecipitation step is performed under a first pH condition, the second coprecipitation step is performed under a second pH condition, and the second pH is adjusted to be between a maximum value and a minimum value of the first pH.

9. The method of claim 8, wherein the first pH is adjusted to from 11 to 13, and the second pH is adjusted to from 10 to 12.

10. The method of claim 1, wherein the first pH is sequentially adjusted to include a pH reduction region, a first pH region, and a second pH region, and the pH values of the first pH region and the second pH region are lower than a starting pH value of the first pH.

11. The method of claim 1, wherein, in the first coprecipitation step, a supply rate of the first transition metal-containing solution is sequentially adjusted to include a first supply rate region and a second supply rate region, and the second supply rate is greater than the first supply rate.

12. The method of claim 11, wherein the first supply rate is from 250 to 350 kg/h, and the second supply rate is from 1900 to 2100 kg/h.

13. The method of claim 1, wherein, in the second coprecipitation step, a supply rate of the second transition metal-containing solution is from 1900 to 2100 kg/h.

14. The method of claim 1, wherein a supply rate of the first chelating agent-containing solution in the first coprecipitation step is greater than a supply rate of the second chelating agent-containing solution in the second coprecipitation step.

15. The method of claim 14, wherein the supply rate of the first chelating agent-containing solution is from 1.3 to 1.7 kg/h, and the supply rate of the second chelating agent-containing solution is from 0.4 to 0.8 kg/h.

16. The method of claim 1, wherein, in the first coprecipitation step, an ammonia concentration of the first reaction solution is adjusted to from 0.40 to 1.60 wt% and is adjusted to include a concentration increase region, and, in the second coprecipitation step, an ammonia concentration of the second reaction solution is adjusted to be between a maximum value and a minimum value of the ammonia concentration of the first reaction solution.

17. The method of claim 1, wherein, in the second coprecipitation step, the ammonia concentration of the second reaction solution is sequentially adjusted to include a concentration reduction region and a concentration maintenance region, and the ammonia concentration in the concentration maintenance region is adjusted to from 0.80 to 1.00 wt%.

18. The method of claim 1, wherein, in the second coprecipitation step, a portion of the second reaction solution is discharged through a discharge port attached to one side of the second reactor, and only a liquid phase is selectively discharged through CCSVR (Continuous Concentrate Single Vessel Reactor) concentration in the discharge port.

19. A positive electrode active material precursor for a lithium secondary battery, manufactured by the method of any one of claims 1 to 18.
